# EUROPEAN PATENT SPECIFICATION

(11) **EP 2 856 883 B1**
(45) Date of publication and mention of the grant of the patent: **06.03.2019**
(21) Application number: 13864295.4
(22) Date of filing: 30.10.2013
(51) Int. Cl.: A23F 5/24, A23L 2/54, A23L 2/56, A23F 5/26

(54) **CARBONATED COFFEE BEVERAGE**
KOHLENSÄUREHALTIGES KAFFEEGETRÄNK
BOISSON GAZEUSE AU CAFÉ

(30) Priority: 18.12.2012 JP 2012275746
(43) Date of publication of application: 08.04.2015
(73) Proprietor: Suntory Holdings Limited, Kita-ku, Osaka-shi Osaka 530-8203 (JP)
(72) Inventor: ASANO, Yu, Kawasaki-shi Kanagawa 211-0067 (JP); ICHIMURA, Atsushi, Kawasaki-shi Kanagawa 211-0067 (JP)
(74) Representative: Vossius & Partner Patentanwälte Rechtsanwälte mbB
(86) International application number: PCT/JP2013/079366
(87) International publication number: WO 2014/097750

(56) References cited:
- JP-A- S5 053 570
- JP-A- S5 963 137
- JP-A- S5 963 137
- JP-A- H07 123 921
- JP-A- H07 123 921
- JP-A- S54 110 362
- JP-A- 2001 186 859
- JP-A- 2004 267 158
- JP-A- 2007 534 301
- JP-A- 2010 075 183
- JP-A- 2013 000 011
- US-A- 3 845 220
- US-A- 4 316 916
- US-A1- 2010 104 702
- WANG XUAN ET AL: "Effect of polyphenols monomer on foaming characteristics of albumen", SHIPIN KEJI = FOOD SCIENCE AND TECHNOLOGY, BEIJING SHI LIANGSHI KEXUE YANJIUSUO, CN, vol. 37, no. 9, 1 January 2012 (2012-01-01), pages 253-256, XP008168478, ISSN: 1005-9989

## Description

### TECHNICAL FIELD

The present invention relates to a carbonated coffee beverage, particularly to a packaged carbonated coffee beverage that is prevented from bubbling over upon the opening of the package of the beverage or other occasions.

### BACKGROUND ART

Coffee is a beverage excellent in aroma and taste and drunk in various everyday situations for an expected refreshing effect of physiologically active substances contained in coffee, such as caffeine. Carbonated beverages are drunk for a refreshing effect expected from cooling sensation provided by the beverages.

When a carbonated coffee beverage containing carbon dioxide and coffee is taken in, synergistic effects of both ingredients are expected. For this reason, the development of carbonated coffee beverages has been attempted so far.

However, coffee-based and gas-containing beverages are known to have the problem of bubbling-over that occurs upon the opening of the packages of the beverages or other occasions. As a method for preventing coffee-based and gas-containing beverages from bubbling over, Patent Document 1 describes a method of producing a gas-containing beverage using a product obtained by adjusting the pH of a coffee extract to 3 to 4.5 to form a floc and remove it. According to Patent Document 2, a coffee-containing carbonated beverage is produced by adding an acid to an aqueous solution of coffee that is a starting material to lower the pH of the solution and thereby cause coagulative precipitation, clarifying the solution, and then carbonating it. However, in general, the pH of a coffee extract is nearly neutral (pH 5 to 6), and lowering the pH to a pH in the acid region (about pH 3 to about pH 4.5) as in the foregoing method causes problems such as the loss of the original flavor of coffee.

According to Patent Document 3, a coffee-containing carbonated beverage is produced by filtering an aqueous solution of coffee through an ultrafiltration membrane having a molecular weight cut-off in the range of 4000 to 50000 and carbonating the resulting filtrate. However, problems such as the loss of flavor also exist in this method.

### CITATION LIST

### PATENT DOCUMENTS

Patent Document 1: JP S54-110362 A
Patent Document 2: JP H07-123921 A
Patent Document 3: JP S59-63137 A

### SUMMARY OF INVENTION

### TECHNICAL PROBLEM

An object of the present invention is to provide a carbonated coffee beverage that has both the features of coffee beverages and those of carbonated beverages and is prevented from bubbling over upon the filling of the beverage in a package or the opening of the package.

### SOLUTION TO PROBLEM

As a result of extensive and intensive studies to achieve the aforementioned object. the present inventors found that the problem of bubbling-over of a carbonated coffee beverage can be improved by the adjustment of the ratio between the chlorogenic acid concentration and coffee solids concentration of the beverage within a predetermined range of ratio. This finding led to the completion of the present invention.

More specifically, the present invention relates to the following, but is not limited thereto:
(1) A packaged carbonated coffee beverage in which a chlorogenic acid concentration (unit: ppm) divided by a coffee solids concentration (unit: wt. %) is 300 or higher.
(2) The beverage according to (1), wherein the coffee solids concentration is 0.17 to 2.33 wt. %.
(3) The beverage according to (1) or (2), which has been filled by a device for sterile filling.
(4) A method of producing a packaged carbonated coffee beverage, comprising:
   i) producing a carbonated coffee beverage which has a coffee solids concentration of 0.17 to 2.33 wt. % and in which a chlorogenic acid concentration (unit: ppm) divided by the coffee solids concentration (unit: wt. %) has been adjusted to 300 or higher, and
   ii) filling the resulting carbonated coffee beverage in a package by a device for sterile filling.
(5) A method of improving the break of bubbles of a coffee beverage, comprising adjusting a chlorogenic acid concentration (unit: ppm) divided by a coffee solids concentration (unit: wt. %) to 300 or higher.

### ADVANTAGEOUS EFFECTS OF INVENTION

The present invention can provide a carbonated coffee beverage that has both the features of coffee beverages and those of carbonated beverages and that is characterized in that the problem of bubbling-over upon the filling of the beverage in a package or the opening of the package has been improved by the adjustment of the ratio between the chlorogenic acid concentration and coffee solids concentration of the beverage within a predetermined range of ratio. The present invention does not need the operation of lowering the pH of coffee extract to form coagulative precipitation and remove it or the operation of removing components having a specific molecular weight through an ultrafiltration membrane. The present invention can provide a carbonated coffee beverage that has not lost the original flavor of coffee extract and does not bubble over.

### BRIEF DESCRIPTION OF DRAWINGS

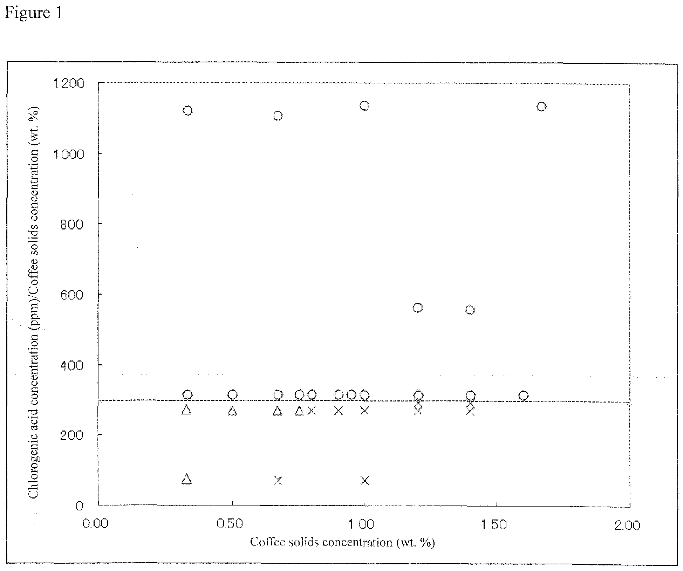

Figure 1 shows the results of the "break of bubbles" test described in Example 1 (evaluation based on the three-level scale of ○ (circle), Δ (triangle) and × (cross)) on a graph with the chlorogenic acid concentration (unit: ppm) divided by the coffee solids concentration (unit: wt. %) on the ordinate axis and the coffee solids concentration (unit: wt. %) on the abscissas axis.

### DESCRIPTION OF EMBODIMENTS

The present invention relates to a carbonated coffee beverage in which the ratio between its chlorogenic acid concentration and coffee solids concentration has been adjusted within a predetermined range of ratio.

The carbonated coffee beverage as referred to herein may be any carbonated beverage containing coffee ingredients. For example, the carbonated coffee beverage may be prepared by a method in which a sweetening agent, a pH adjuster, a flavor component, a coloring agent, a preservative and/or the like are added to coffee extract as needed, to prepare a preparation liquid, subsequently carbon dioxide gas is provided thereto by a common method to obtain a predetermined gas pressure and then the liquid is filled in a package.

Coffee beans that are used as a starting material of the coffee extract are not particularly limited and may be of any species. Examples include Arabica beans and Robusta beans. The roasting degree of the coffee beans, which is generally expressed as light roast, medium roast, or dark roast, in that order, is also not particularly limited.

The coffee extract may be, for example, a solution of roasted and ground coffee beans that have been extracted with water, warm water or the like, a solution of concentrated coffee extract that has been diluted to a predetermined concentration, or a solution of instant coffee powder obtained by a means such as freeze-drying or spray-drying. From these solutions, microparticles may be removed by a common method such as filtration (e.g., crossflow filtration) or centrifugation. The insoluble solids contained in those solutions may be solubilized by enzyme treatment or the like.

The chlorogenic acids in the present invention mean 3-caffeoylquinic acid, 4-caffeoylquinic acid, 5-caffeoylquinic acid, 3-ferulicquinic acid, 4-ferulicquinic acid, 5-ferulicquinic acid, 3,4-dicaffeoylquinic acid, 3,5-dicaffeoylquinic acid, and 4,5-dicaffeoylquinic acid. The chlorogenic acid concentration means the total concentration (ppm) of these compounds in a carbonated coffee beverage. The chlorogenic acid concentration may be measured by high-performance liquid chromatography (HPLC). A general detection means in HPLC is UV detection, but CL (chemiluminescence) detection, EC (electrolchemical) detection, LC-MS detection or the like enables more highly sensitive detection. Specifically, for example, a carbonated coffee beverage is diluted with pure water as appropriate, then the resulting solution is filtered through a 0.45 µm filter, and the chlorogenic acid concentration can be measured with "LC10A," which is an HPLC system produced by Shimadzu Corporation, using "develosil C30-UG-5," which is a column produced by Nomura Chemical Co., Ltd.

The chlorogenic acid concentration of the carbonated coffee beverage of the present invention is not particularly limited, but is about 20 to about 2000 ppm. The chlorogenic acid concentration may be adjusted by changing the roasting degree of coffee beans that are a starting material, extraction conditions, concentration conditions and/or the like.

The coffee solids in the present invention mean solids as expressed in mass (g) which are contained in coffee extract that is a starting material (the coffee extract encompasses a solution in which concentrated coffee extract or instant coffee is dissolved), and the mass is determined from a sugar refractometer index (Brix) at 20°C. Specifically, the sugar refractometer index (Brix) of coffee extract is measured with a sugar refractometer (e.g., Atago RX-5000) and this index is multiplied by the amount (g) of the coffee extract used in the measurement to thereby calculate the coffee solids content (g). The coffee solids concentration in the present invention means the concentration (wt. %) of the coffee solids (g) as determined above in the carbonated coffee beverage. In terms of the balance between the refreshing sensation peculiar to carbonated beverages and the original flavor of coffee, the coffee solids concentration is preferably 0.17 to 2.33 wt. %, more preferably 0.33 to 2.00 wt. %, even more preferably 0.50 to 1.85 wt. %.

As described above, coffee extract is generally used in the measurement of the coffee solids concentration. In the case of a carbonated coffee beverage containing no additive dairy ingredients and containing sugars in known amounts, the sugar refractometer index of coffee extract can be estimated by the subtraction of the known sugar-derived sugar refractometer index from that of the carbonated coffee beverage, and the estimated index can be used to measure the coffee solids concentration. It is presumed that the amounts of additives other than dairy ingredients hardly influence the sugar refractometer index as long as the amounts of the additives are those for use in common coffee beverages.

In the carbonated coffee beverage of the present invention, the chlorogenic acid concentration (unit: ppm) divided by the coffee solids concentration (unit: wt. %) defined above is 300 or higher (The coffee solids concentration is a concentration calculated from both the weight (g) of the carbonated coffee beverage and the value obtained by multiplying sugar refractometer index (Brix value) of coffee extract by the amount (g) of the coffee extract used in measurement (The value obtained by the multiplication is the coffee solids content; Unit: gram (g))). The upper limit of the value obtained by the division is not particularly limited, but is presumed to be about 1200 in terms of the flavor of the coffee beverage.

It is preferred that the pH and gas pressure of the carbonated coffee beverage of the present invention fall within predetermined ranges. The gas pressure as referred to herein means carbon dioxide gas pressure and, for convenience, the pH of the carbonated coffee beverage means a pH as measured before carbon dioxide gas is provided.

For pH adjustment, a common pH adjuster may be used. Examples of the pH adjuster include bases such as sodium hydroxide and potassium hydroxide; sodium salts or potassium salts of organic acids such as sodium hydrogen carbonate, sodium carbonate, potassium hydrogen carbonate, potassium carbonate, disodium hydrogenphosphate, sodium citrate, potassium citrate, sodium acetate, potassium acetate, and sodium L-ascorbate; and other pH adjusters or acidulants that can be used under the Food Sanitation Act. The use of a base such as sodium hydroxide or potassium hydroxide is preferred in terms of the flavor of the beverage. Alternatively, the pH can be adjusted to a predetermined pH by the blending of coffee extracts differing in pH.

The pH of common coffee extract is about 5 to about 6, and the pH of the beverage of the present invention is preferably adjusted to a similar pH in terms of flavor. For the prevention of the bubbling-over of the beverage, the present invention does not need the operation of lowering pH to form coagulative precipitation, and this advantage enables the preparation of a beverage having a pH close to that of common coffee extract. In the present invention, the pH is preferably in the range of 4.0 to 6.5, more preferably 4.2 to 6.5, even more preferably 4.5 to 6.5, still more preferably 4.7 to 6.5, yet more preferably 5.0 to 6.5.

For convenience, the pH of the carbonated coffee beverage means a pH as measured before carbon dioxide gas is provided, as mentioned above. The pH as measured before carbon dioxide gas is provided can be determined by the process of opening a package filled with the beverage to deaerate it.

The gas pressure of the carbonated coffee beverage of the present invention means gas pressure in a package at 20°C, except special cases. The pressure may be measured by a standard technique that is well known to a skilled person. The measurement may be performed with GVA-500A, which is a gas volume-measuring device produced by Kyoto Electronics Manufacturing Co., Ltd., although the measurement is not limited to this method. It is desirable that the measurement conditions should be set as follows.

**[Formula 1]**

| [SET Para.] | | |
|---|---|---|
| Rot1-1 | time | 0sec |
| Wait1 | time | 0sec |
| Sniff. Level | | 0.15kg/cm2 |
| Rot1-2 | time | 120sec |
| E-Sni. Level | | 0.16kg/cm2 |
| Sot2 | time | 70sec |
| Rot3-1 | time | 0sec |
| Wait3 | time | 0sec |
| Rot3-2 | time | 25sec |
| Trial Count | | 8 |
| Press Level | | 0.10kg/cm2 |
| Rot4-1 | time | 0sec |
| Wait4 | time | 0sec |
| Rot4-2 | time | 120sec |
| Rot4-3 | time | 25sec |

The amount of the carbon dioxide gas contained in the carbonated coffee beverage can be expressed in terms of gas pressure (kgf/cm² or MPa) or in terms of gas volume (g/kg or w/w %) at 20°C. Gas pressure and gas volume can be converted into each other as appropriate. In terms of the balance between the flavor provided as that of a coffee beverage and the refreshing sensation provided as that of a carbonated beverage, the gas pressure is preferably 0.8 to 4.0 kgf/cm², more preferably 1.0 to 3.5 kgf/cm², even more preferably 1.5 to 3.5 kgf/cm².

The production of the carbonated coffee beverage of the present invention includes each step of coffee beverage-producing processes well known to the skilled person as well as a step of providing carbon dioxide gas.

Into the carbonated coffee beverage of the present invention, starting materials that are generally incorporated into a beverage, for example, a coloring agent or dye such as caramel, an antifoaming agent, a thickener, and/or an emulsifier, may be incorporated as needed.

The carbonated coffee beverage of the present invention is filled in a package that can store the beverage (for example, a plastic bottle, a bottle, a can, a pack). A preferred package is one having a cap that can recap the package, as can be exemplified by a molded package consisting essentially of polyethylene terephthalate (so-called a PET bottle) and a bottle can made of a metal such as aluminum or steel. It is preferred that the carbonated coffee beverage of the present invention is packaged by a device for sterile filling.

A device for sterile filling generally means a device by which a content sterilized at a high temperature for a short time is filled and sealed in a sterilized package under a sterile environment. The present invention includes filling a package with a liquid such as a carbonated beverage by a device having a liquid reservoir to which a back pressure has been applied by carbon dioxide gas. Specifically, a package is preliminarily sterilized, a beverage liquid and carbon dioxide gas that are to be filled are also preliminarily sterilized to prepare a sterile carbonated beverage, and this beverage is filled and sealed in the package while the inside of the package and the contents to be filled are being kept sterile by a means such as surrounding a filling valve with a pressurized sterile gas.

The carbonated coffee beverage of the present invention has both the features of coffee beverages and those of carbonated beverages and is characterized in that bubbling-over is suppressed upon the filling of the beverage in a package or the opening of the package. The bubbling-over upon the filling or the opening means the phenomenon of intense bubbling of the carbonated coffee beverage and its outflow from the package or the like which occur when the beverage is filled in the package or the package containing the beverage is opened. This phenomenon is sometimes observed in common carbonated beverages, while it is markedly observed especially in carbonated coffee beverages containing coffee ingredients (Patent Documents 1 to 3). In the present invention, the ratio between the concentration of chlorogenic acids and that of coffee solids is adjusted within a certain range of ratio to thereby reduce the problem of bubbling-over as observed markedly in carbonated coffee beverages. It is unclear why the adjustment of the ratio between the chlorogenic acid concentration and the coffee solids concentration within a certain range of ratio suppresses the bubbling-over of a carbonated coffee beverage. Meanwhile, the present inventors discovered that the time spent from the generation of bubbles caused by shaking, pouring or the like to the disappearance of the generated bubbles is short with the use of a preparation liquid (a liquid immediately before carbon dioxide gas is provided) having the ratio between the coffee bean-derived chlorogenic acid concentration and the coffee solids concentration within a certain range of ratio (In short, the preparation liquid exhibits good break of bubbles). It is likely that the good break of bubbles (improved break of bubbles) in the preparation liquid results in less bubbling-over when carbon dioxide gas is provided to prepare a carbonated coffee beverage.

### EXAMPLES

The present invention will be described below by means of examples, but is not limited thereto.

### [Example 1]

An appropriate amount of warm water was added to predetermined coffee solids using instant coffee or coffee extract as a starting material of coffee to produce coffee beverages (Coffee solids concentrations: 0.33 to 1.67 wt. %). Since the chlorogenic acid concentrations of the respective starting materials differed depending on the roasting degree of coffee beans, extraction conditions, concentration conditions and the like, the chlorogenic acid concentrations of the obtained coffee beverages were measured and the beverages were subjected to a test for evaluation of the break of bubbles. Although the pressure of carbon dioxide gas might be responsible as a factor for bubbling-over upon filling or opening, the beverages to which carbon dioxide gas had not been provided were evaluated in this test to evaluate their liquid states.

The test for evaluation of the break of bubbles was conducted in the following manner: a funnel was placed on the opening of a 500 ml graduated cylinder, and 400 ml of each evaluation sample was poured into the funnel. The funnel to be used had a stem outside diameter of 20 to 22 mm and the temperature of the liquid of content was 20°C. The tip of the funnel was adjusted to be positioned at the upper end of the graduated cylinder. The time spent from the generation of bubbles on the surface of liquid by the pouring of the sample to the disappearance of the bubbles was measured. The time that elapsed before the bubbles disappeared was determined as the time that elapsed before a part of the liquid surface became visible when it was observed from the top of the graduated cylinder. The time that elapsed before the bubbles disappeared was taken as an indicator of the break of bubbles. The symbol ○ (circle) denotes 6 minutes or less, Δ (triangle) denotes 6 to 20 minutes, and × (cross) denotes 20 minutes or more.

The results are shown in Table 1 and Figure 1.

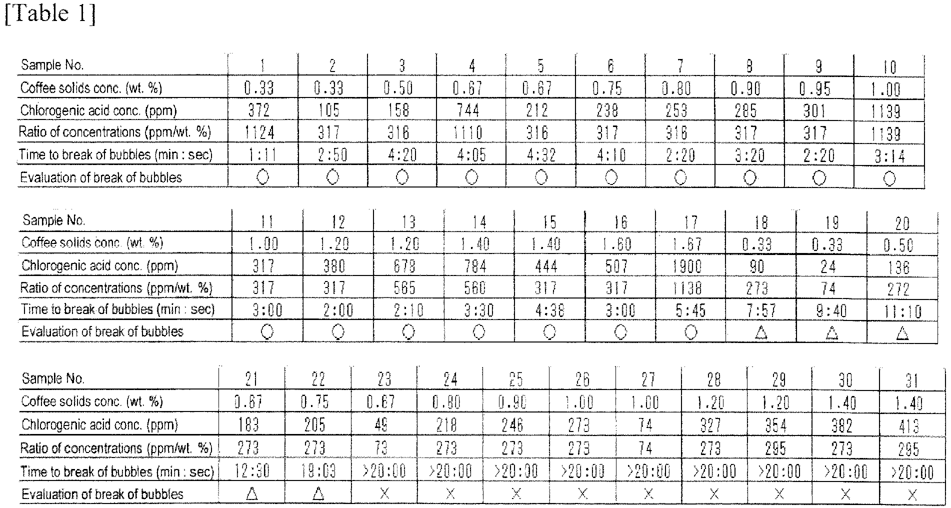

### [Example 2]

To the 1.0% coffee solids-containing samples obtained in Example 1, carbon dioxide gas was provided, and the bubbling-over of the resulting carbonated coffee beverages was evaluated. A carbonator was used to provide the carbon dioxide gas to the samples, and 330 ml of each sample containing the gas was filled in a 350 ml PET bottle container and then refrigerated and stored overnight. The gas pressure applied was 2.1 kgf/cm².

On the next day, the temperature of the liquid of content was adjusted to room temperature (23°C) and a shaking test as described below was conducted. More specifically, the PET bottles containing the test samples were fixed horizontally to a shaker for experimental use (SHAKER SA31, which is a product of Yamato Scientific Co., Ltd.) and they were shaken at 72 rpm for 5 minutes. The central axis of each PET bottle was kept parallel to the direction of amplitude of the shaker.

Promptly after completion of the shaking process, the PET bottles were stood upright on a laboratory table. After a defined period of time, the PET bottles were opened to observe the presence or absence of bubbling from the openings of the PET bottles. The results of this evaluation, which was based on the criteria described below, are shown in Table 2.
○ (circle): The sample did not bubble over.
Δ (triangle): The sample did not bubble over, but dome-like bubbles were formed at the opening.
× (cross): The sample bubbled over.

**[Table 2]**

| Sample No. | Ratio of concentrations (ppm/wt. %) | Time to opening (sec) | Result |
|---|---|---|---|
| 10 | 1139 | 45 | ○ |
| | | 60 | ○ |
| 11 | 317 | 45 | Δ |
| | | 60 | ○ |
| 26 | 273 | 45 | × |
| | | 60 | Δ |

## Claims

1. A packaged carbonated coffee beverage in which a chlorogenic acid concentration (unit: ppm) divided by a coffee solids concentration (unit: wt. %) is 300 or higher.

2. The beverage according to claim 1, wherein the coffee solids concentration is 0.17 to 2.33 wt. %.

3. The beverage according to claim 1 or 2, which has been filled by a device for sterile filling.

4. A method of producing a packaged carbonated coffee beverage, comprising:
i) producing a carbonated coffee beverage which has a coffee solids concentration of 0.17 to 2.33 wt. % and in which a chlorogenic acid concentration (unit: ppm) divided by the coffee solids concentration (unit: wt. %) has been adjusted to 300 or higher, and
ii) filling the resulting carbonated coffee beverage in a package by a device for sterile filling.

5. A method of improving the break of bubbles of a coffee beverage, comprising adjusting a chlorogenic acid concentration (unit: ppm) divided by a coffee solids concentration (unit: wt. %) to 300 or higher.

## Patentansprüche

1. Ein verpacktes kohlensäurehaltiges Kaffeegetränk, wobei eine Chlorogensäure-Konzentration (Einheit: ppm) geteilt durch eine Kaffeefeststoffkonzentration (Einheit: Gew.-%) 300 oder höher beträgt.

2. Das Getränk nach Anspruch 1, wobei die Kaffeefeststoffkonzentration 0,17 bis 2,33 Gew.-% beträgt.

3. Das Getränk nach Anspruch 1 oder 2, das mithilfe einer Vorrichtung für sterile Abfüllung abgefüllt wurde.

4. Ein Verfahren zur Herstellung eines verpackten kohlensäurehaltigen Kaffeegetränks, umfassend:
i) Herstellen eines kohlensäurehaltigen Kaffeegetränks, das eine Kaffeefeststoffkonzentration von 0,17 bis 2,33 Gew.-% aufweist und wobei eine Chlorogensäure-Konzentration (Einheit: ppm) geteilt durch die Kaffeefeststoffkonzentration (Einheit: Gew.-%) auf 300 oder höher eingestellt wurde und
ii) Abfüllen des so erhaltenen kohlensäurehaltigen Kaffeegetränks in eine Verpackung mithilfe einer Vorrichtung für sterile Abfüllung.

5. Ein Verfahren zur Verbesserung des Zerplatzens von Bläschen eines Kaffeegetränks, umfassend Einstellen einer Chlorogensäure-Konzentration (Einheit: ppm) geteilt durch eine Kaffeefeststoffkonzentration (Einheit: Gew.-%) auf 300 oder höher.

## Revendications

1. Boisson gazeuse au café conditionnée, dans laquelle la concentration d'acide chlorogénique (unité : ppm) divisée par la concentration de solides de café (unité : % en poids) est de 300 ou plus.

2. Boisson selon la revendication 1, dans laquelle la concentration de solides de café est de 0,17 à 2,33 % en poids.

3. Boisson selon la revendication 1 ou 2, qui a été introduite par un dispositif pour remplissage stérile.

4. Procédé de production d'une boisson gazeuse au café conditionnée, comprenant :
i) la production d'une boisson gazeuse au café qui a une concentration de solides de café de 0,17 à 2,33 % en poids et dans laquelle la concentration d'acide chlorogénique (unité : ppm) divisée par la concentration de solides de café (unité : % en poids) a été ajustée à 300 ou plus, et
ii) le remplissage d'un conditionnement avec la boisson gazeuse au café résultante au moyen d'un dispositif pour remplissage stérile.

5. Procédé pour améliorer la rupture des bulles d'une boisson au café, comprenant l'ajustement de la concentration d'acide chlorogénique (unité : ppm) divisée par la concentration de solides de café (unité : % en poids) à 300 ou plus.
